# EUROPÄISCHE PATENTSCHRIFT

(11) **EP 1 794 379 B1**
(45) Veröffentlichungstag und Bekanntmachung des Hinweises auf die Patenterteilung: **24.09.2008**
(21) Anmeldenummer: 05772960.0
(22) Anmeldetag: 05.07.2005
(51) Int. Cl.: E03F 5/14, E03F 5/16

(54) **ANLAGE ZUR MECHANISCHEN REINIGUNG VON FLÜSSIGKEITEN**
INSTALLATION FOR MECHANICAL PURIFICATION OF LIQUIDS
INSTALLATION POUR L'EPURATION MECANIQUE DE LIQUIDES

(30) Priorität: 01.10.2004 DE 102004048369; 03.12.2004 DE 102004058421
(43) Veröffentlichungstag der Anmeldung: 13.06.2007
(73) Patentinhaber: Hans Huber AG Maschinen- und Anlagenbau, D-92334 Berching (DE)
(72) Erfinder: BRANNER, Wolfgang, 92334 Berching (DE)
(74) Vertreter: Bergmeier, Werner
(86) Internationale Anmeldenummer: PCT/EP2005/053182
(87) Internationale Veröffentlichungsnummer: WO 2006/037669

(56) Entgegenhaltungen:
- DE-A1- 2 444 241
- DE-A1- 3 920 196
- DE-A1- 4 409 216
- DE-A1- 4 409 692
- US-A- 4 940 539
- US-A- 5 061 369
- US-A1- 2004 011 738
- PATT H ET AL: "EINSATZ BELUFTETER SANDFANGE AUF KLARANLAGEN EMPLOYMENT OF VENTILATED GRIT CHAMBERS IN SEWAGE TREATMENT PLANTS" KORRESPONDENZ ABWASSER, ABWASSERTECHNISCHE VEREINIGUNG, ST. AUGUSTIN, DE, Bd. 43, Nr. 9, September 1996 (1996-09), Seite 1544,1546,1548, XP000639395 ISSN: 0341-1540
- STEIN A: "EIN BEITRAG ZUR GESTALTUNG BELUEFTETER SANDFAENGE" KORRESPONDENZ ABWASSER, ABWASSERTECHNISCHE VEREINIGUNG, ST. AUGUSTIN, DE, Bd. 39, Nr. 4, 1. April 1992 (1992-04-01), Seiten 518,521-522,52, XP000263169 ISSN: 0341-1540

## Beschreibung

Die vorliegende Erfindung betrifft eine Anlage zur mechanischen Reinigung von Flüssigkeiten, insbesondere Abwasser mit einem Behälter, welcher einen Zulauf und einen Ablauf für die Flüssigkeit und im Bereich einer Sohle einen Sammelraum für Sinkstoffe aufweist. Die Anlage weist eine Einrichtung zum Abscheiden der Sinkstoffe aus der Flüssigkeit, eine Transportfördereinrichtung für die Sinkstoffe sowie eine Einrichtung zum Austragen der Sinkstoffe an einer Austragsstelle des Behälters auf. Ferner weist sie mindestens zwei Kammern auf, wobei eine Kammer belüftet und eine Kammer unbelüftet ist.

Derartige Anlagen werden bei der Reinigung von Abwässern in Kläranlagen eingesetzt. Im Abwasser sind neben organischen Inhaltsstoffen auch sogenannte Sinkstoffe, vorwiegend Sande und andere mineralischen Stoffe, enthalten. Diese anorganischen Stoffe sind in der biologischen Abwasserbehandlung nicht umwandelbar und können sich nachteilig auf die Betriebssicherheit von Kläranlagen und Schlammbehandlungseinrichtungen auswirken. Eine Trennung der im Abwasser mitgespülten Sande und anderer mineralischer Stoffe von den organischen Stoffen ist daher erforderlich. In Kläranlagen wird das Abwasser zunächst durch einen Rechen oder ein Sieb geleitet, welche grobe Verschmutzungen zurückhalten. Anschließend wird der im Abwasser mitgeführte Sand in Sandfanganlagen durch Sedimentation abgeschieden. Dazu sind neben Rundsandfanganlagen unbelüftete Sandfanganlagen und belüftete Sandfänge bekannt.

Auf größeren Kläranlagen wird vorwiegend der im wesentlichen aus einer langgezogenen Rinne bestehende unbelüftete Langsandfang eingesetzt, welcher horizontal durchströmt wird. Der Querschnitt kann hierbei rechteckig oder trapezförmig ausgebildet sein. Durch Vorgabe einer entsprechenden Fließgeschwindigkeit setzt sich der mitgeführte Sand auf der Sohle ab, während die spezifisch leichteren organischen Stoffe von der Strömung in der Schwebe gehalten und abgespült werden. Demzufolge muss der Sandfang eine entsprechende Länge aufweisen. Nachteilig bei dieser Ausführung einer Sandfanganlage ist es, dass sich neben den mineralischen Bestandteilen auch organische Bestandteile mit ablagern. Eine Abscheidung von Fett ist mit diesen Anlagen nicht möglich. Insbesondere ist es jedoch bei den unbelüfteten Langsandfanganlagen schwierig, eine von der Zuflusswassermenge unabhängige Fließgeschwindigkeit einzuhalten. Die Abscheideleistung eines unbelüfteten Langsandfanges ist daher stark von der Zuflussmenge abhängig.

Eine verbesserte Trennung zwischen organischen und anorganischen Stoffen unabhängig vom Zufluss konnte durch den Einsatz belüfteter Sandfänge erreicht werden. Die Ablagerung organischer Stoffe wird hierbei durch eine gleichmäßige Umwälzströmung begrenzt. Durch das Einblasen von Luft in Sohlennähe wird eine Walzenströmung im Abwasser erzeugt, so dass unabhängig vom Zufluss an der Sohle des Beckens eine für die Absetzung der Sinkstoffe günstige Umfangsgeschwindigkeit des Abwassers erreicht wird. Zusätzlich kann an belüfteten Sandfanganlagen eine Fettkammer angeordnet sein, die durch eine geschlitzte Trennwand von dem Sandfang abgetrennt ist. Durch die flotierende Wirkung der Belüftung kann auch der größte Teil der Fettbestandteile abgeschieden werden. Durch belüftete Sandfänge konnte das Absetzen organischer Stoffe weitgehend vermieden werden und eine vom Zufluss unabhängige konstante Abscheideleistung erreicht werden. Die durch die Belüftung entstehenden Turbulenzen halten jedoch neben den organischen Stoffen auch Sand in der Schwebe, so dass sich der Rückhalt insbesondere feiner Sande mit zunehmendem Lufteintrag verschlechtert.

Aus der US-A-2004/0011738 ist eine kombinierte Anlage zum Abscheiden von Sinkstoffen bekannt, welche eine belüftete und eine unbelüftete Kammer aufweist. Die Kammern sind parallel nebeneinander angeordnet, und durch eine Tauchwand voneinander abgetrennt, welche sich über die gesamte Länge der Anlage erstreckt. Der Übertritt der Flüssigkeit von der belüfteten in die unbelüftete Kammer kann somit bereits kurz nach dem Einströmen in die belüftete Kammer erfolgen. Nach einer Ausführung kann die Flüssigkeit zumindest teilweise in die belüftete Stufe zurückgeführt werden. Die Verweilzeit der Flüssigkeit in der belüfteten Stufe ist dennoch vergleichsweise kurz und zudem undefiniert. Hierdurch besteht die Gefahr, dass organische Partikel nur ungenügend abgetrennt werden und mit abgeschieden werden.

Aufgabe der vorliegenden Erfindung ist es, in einer kombinierten Anlage eine gute Abscheidung mineralischer Partikel aller Korngrößen unabhängig vom Zufluss zu erreichen und eine Absetzung organischer Stoffe weitgehend zu vermeiden.

Die Aufgabe wird gelöst mit einer Anlage zur mechanischen Reinigung von Flüssigkeiten mit den Merkmalen des Anspruchs 1.

Eine Anlage zur mechanischen Reinigung von Flüssigkeiten weist einen Behälter zum Abscheiden von Sinkstoffen sowie eine Transportfördereinrichtung zum Transport der Sinkstoffe zu einer Austragsstelle auf. Der Behälter weist einen Zulauf und einen Ablauf für die Flüssigkeit auf. Im Bereich einer Sohle ist in dem Behälter ein Sammelraum für Sinkstoffe ausgebildet. Zur Lösung der Aufgabe besteht der Behälter zum Abscheiden der Sinkstoffe aus wenigstens zwei Kammern, wobei wenigstens eine Kammer als belüftete und wenigstens eine als unbelüftete Kammer ausgebildet ist. Die Kammern sind in Längsrichtung des Behälters hintereinander angeordnet. Durch Anordnung einer belüfteten Kammer wird eine vom Zufluss in die Anlage unabhängige Abscheideleistung erreicht. Ein Absetzen von organischen Bestandteilen, welche der biologischen Reinigung zugeführt werden sollen, wird durch die Belüftung ebenfalls weitgehend vermieden. In einer unbelüfteten Kammer können auch feinere Sande gut abgesetzt werden, so dass eine erfindungsgemäße Anlage eine sehr hohe Abscheideleistung aufweist. Darüber hinaus ermöglicht eine derartige Anlage auch das Abscheiden und Austragen von Fetten, welche ebenfalls nicht in den biologischen Klärprozess gelangen sollen.

Eine besonders vorteilhafte Ausführung der Erfindung sieht vor, dass die unbelüftete Kammer des Behälters in Betrieb von unten nach oben durchströmt wird. Der Weg, den die Partikel zurücklegen müssen, bis sie sich absetzen können, kann durch die Anströmung von unten erheblich reduziert werden. Die Baulänge der Anlage ist daher für die Abscheideleistung weitgehend unerheblich, so dass eine derartige Anlage im Vergleich zum Stand der Technik erheblich kürzer ausgeführt werden kann.

Bei einer bevorzugten Ausführungsform der Erfindung sind die belüftete und die unbelüftete Kammer durch eine Trennwand voneinander abgetrennt, welche sich in Behälterquerrichtung erstreckt und eine Öffnung für die Flüssigkeit aufweist.

Eine besonders vorteilhafte Ausführung der Erfindung sieht vor, dass eine belüftete Kammer in Flussrichtung vor einer unbelüfteten Kammer angeordnet ist. Das Abwasser wird hierbei in der belüfteten Kammer in eine zirkulierende Strömung versetzt, so dass die organischen Bestandteile des Abwassers in der Schwebe gehalten werden. Die Trennwand weist bei dieser Anordnung eine Öffnung im unteren Bereich auf, so dass die Wasserwalze von unten in den unbelüfteten Bereich eingeleitet wird. Die durch die Belüftung entstehenden Turbulenzen klingen bei dieser Anordnung schnell ab. Besonders vorteilhaft ist es hierbei, wenn an der Trennwand für die belüftete und die unbelüftete Kammer eine Leiteinrichtung für die Flüssigkeit zur Erzielung einer gleichmäßigen Aufwärtsströmung angeordnet ist. Vorzugsweise erstreckt sich die Leiteinrichtung in Längsrichtung der unbelüfteten Kammer, so dass eine gleichmäßige Aufwärtsströmung über die gesamte Länge der unbelüfteten Kammer erreicht wird.

Eine andere vorteilhafte Ausführungsform der Erfindung sieht vor, dass eine unbelüftete Kammer in Flussrichtung vor einer belüfteten Kammer angeordnet ist. Durch diese Anordnung lässt sich der Abfluss des gereinigten Abwassers besonders einfach gestalten. Vorteilhafterweise ist hierbei an der unbelüfteten Kammer zulaufseitig eine Leiteinrichtung für die Flüssigkeit zur Erzielung einer Aufwärtsströmung angeordnet. Durch die Leiteinrichtung kann das Abwasser am vorderen Ende und in einer für die Absetzung günstigen Tiefe in die unbelüftete Kammer eingeleitet werden.

Um auch Schwimmstoffe, insbesondere Fette, aus dem Abwasser entfernen zu können, ist es vorteilhaft, wenn der Behälter zum Abscheiden von Sinkstoffen eine Fettfangkammer aufweist. Hierdurch können auch Fette, welche sich störend auf den biologischen Abwassereinigungsprozess auswirken, aus dem Abwasser entfernt werden.

In Weiterbildung der Erfindung wird vorgeschlagen, dass der Behälter zum Abscheiden von Sinkstoffen ablaufseitig ein Überfallrohr aufweist. Insbesondere, wenn der unbelüftete Teil der Anlage nach dem belüfteten Teil angeordnet ist, kann durch den Ablauf über ein Überfallrohr eine kleine Strömungsgeschwindigkeit erhalten werden, so dass die Absetzung der Partikel im unbelüfteten Teil nicht behindert wird.

Eine andere vorteilhafte Weiterbildung der Erfindung ist dadurch gekennzeichnet, dass der Behälter zum Abscheiden von Sinkstoffen einen Notumlauf aufweist. Hierdurch ist eine Umgehung der Anlage beispielsweise zu Wartungszwecken möglich. Ebenso kann durch den Notumlauf die Anlage bei hohen Zuflüssen entlastet werden.

Vorzugsweise weist die Anlage als Transportfördereinrichtung für die Sinkstoffe eine Räumschnecke auf, welche vorteilhafterweise in dem Sammelraum für die Sinkstoffe angeordnet ist. Das Sandfanggut kann hierdurch auf besonders einfache Weise geräumt werden.

Als ebenfalls besonders vorteilhaft hat es sich erwiesen, wenn dem Behälter zum Abscheiden von Sinkstoffen eine Einrichtung zum Abscheiden von Schwimm- und Schwebstoffen zugeordnet ist. Grobe Verschmutzungen werden hierdurch bereits zurückgehalten, so dass die anschließende Abscheidung von Sinkstoffen besonders effektiv erfolgen kann. Vorzugsweise ist die Einrichtung zum Abscheiden von Schwimm- und Schwebstoffen in dem Behälter angeordnet. Eine erfindungsgemäße Anlage kann hierdurch besonders kompakt ausgeführt werden, so dass sie insbesondere für den Einsatz auch auf kleineren Kläranlagen hervorragend geeignet ist. Die Baulänge der gesamten Anlage kann hierdurch erheblich reduziert werden.

Weiterhin ist es vorteilhaft, wenn die Einrichtung zum Abscheiden von Schwimm- und Schwebstoffen eine Rechen- oder Siebanlage ist. Ist die Rechen- oder Siebanlage als rotierend angetriebene Anlage ausgebildet, ist eine besonders platzsparende Anordnung in dem Behälter möglich. Besonders vorteilhaft ist es, wenn die Rechen- oder Siebanlage das Rechengut mit dem Austrag entwässert.

Bei einer anderen vorteilhaften Ausführungsform der Erfindung weist die Einrichtung zum Abscheiden von Schwimm- und Schwebstoffen einen Überlauf auf. Bei hohem Wasseranfall oder Störungen in der Siebeinrichtung kann das Wasser hierdurch dennoch der Einrichtung zur Abscheidung von Sinkstoffen zugeführt werden. Besonders vorteilhaft ist es hierbei, wenn an dem Überlauf ein Rechen zum Rückhalt von Grobstoffen angeordnet ist. Das Abwasser kann hierbei unter Umgehung der Rechen- oder Siebanlage der Abscheidung von Sinkstoffen zugeführt werden. Ein übermäßiger Eintrag von Grobstoffen wird dennoch vermieden.

Daneben ist es besonders vorteilhaft, wenn die Anlage ein hydraulisches Gefälle aufweist. Die Durchströmung der Anlage ist hierdurch ohne zusätzliche Einrichtungen zur Strömungserzeugung möglich.

Bei einer vorteilhaften Ausführungsform der Erfindung ist vorgesehen, dass die Austragsstelle für die Sinkstoffe ablaufseitig angeordnet ist. Eine zusätzliche Einrichtung zur Sandwäsche kann hierdurch besonders günstig und konstruktiv einfach angeordnet werden. Ebenfalls vorteilhaft ist es, wenn die Austragsstelle für die Sinkstoffe zulaufseitig oder mittig angeordnet ist. Insbesondere bei kleinen Sandfanganlagen und Kompaktanlagen kann eine Einrichtung zum Austragen der Sinkstoffe hierdurch platzsparend in den Behälter integriert werden. Der Austrag entgegen der Flussrichtung bewirkt darüber hinaus ein Auswaschen evtl. abgeschiedener organischer Stoffe aus den Sinkstoffen.

Bei einer anderen vorteilhaften Weiterbildung der Erfindung ist an der Austragsstelle eine Einrichtung zum Austragen der Sinkstoffe, insbesondere eine Förderschnecke oder Klassierschnecke, angeordnet. Der abgeschiedene Sand kann hierdurch entwässert ausgetragen und abgeführt werden.

In Weiterbildung der Erfindung wird vorgeschlagen, dass zwischen der Austragsstelle und dem Ablauf des Behälters eine Verbindungsleitung angeordnet ist. Der Verbindungsleitung ist eine Belüftungseinrichtung zugeordnet, so dass evtl. abgeschiedene organische Stoffe aufgetrieben und von dem Sog der ablaufenden Flüssigkeit erfasst werden.

Daneben ist es vorteilhaft, wenn der Einrichtung zum Austragen der Sinkstoffe eine Einrichtung zur Sandwäsche zugeordnet ist.

Bei einem Verfahren zum Abscheiden von Sinkstoffen aus Flüssigkeiten erfolgt die Abscheidung der Sinkstoffe mehrstufig in einem Behälter. Wenigstens eine der beiden Stufen ist hierbei als belüftete Stufe und wenigstens eine weitere Stufe als unbelüftete Stufe ausgeführt. Der Behälter, welcher einen Zulauf und einen Ablauf für die Flüssigkeit sowie im Bereich der Sohle einen Sammelraum für Sinkstoffe aufweist, ist hierzu in wenigstens zwei Kammern unterteilt. Mit einem derartigen Verfahren kann eine vom Zufluss in die Anlage unabhängige konstante Abscheideleistung erreicht werden, wobei dennoch auch feinere Sande zuverlässig abgesetzt werden.

Als besonders vorteilhaft hat es sich erwiesen, wenn in einer unbelüfteten Stufe die Flüssigkeit den Behälter von unten nach oben durchströmt. Die tiefe Einleitung der Flüssigkeit bewirkt eine kurze Sinkzeit der Partikel, so dass diese besonders zuverlässig abgesetzt werden können.

Ebenfalls vorteilhaft ist es, wenn die Flüssigkeit nacheinander eine belüftete und eine unbelüftete Stufe durchströmt. Durch die Belüftung bedingte Turbulenzen können in dieser Anordnung schnell abklingen.

Weitere Vorteile der Erfindung sind im Zusammenhang mit den nachfolgenden Ausführungsbeispielen beschrieben. Es zeigen
- **Figur 1**: eine schematische Darstellung einer erfindungsgemäßen Anlage mit einer Einrichtung zur Abscheidung von Sinkstoffen,
- **Figur 2**: eine erfindungsgemäße Anlage zur Reinigung von Flüssigkeiten in einer Seitenansicht und
- **Figur 3**: eine erfindungsgemäße Anlage zur Reinigung von Flüssigkeiten in einer Draufsicht.

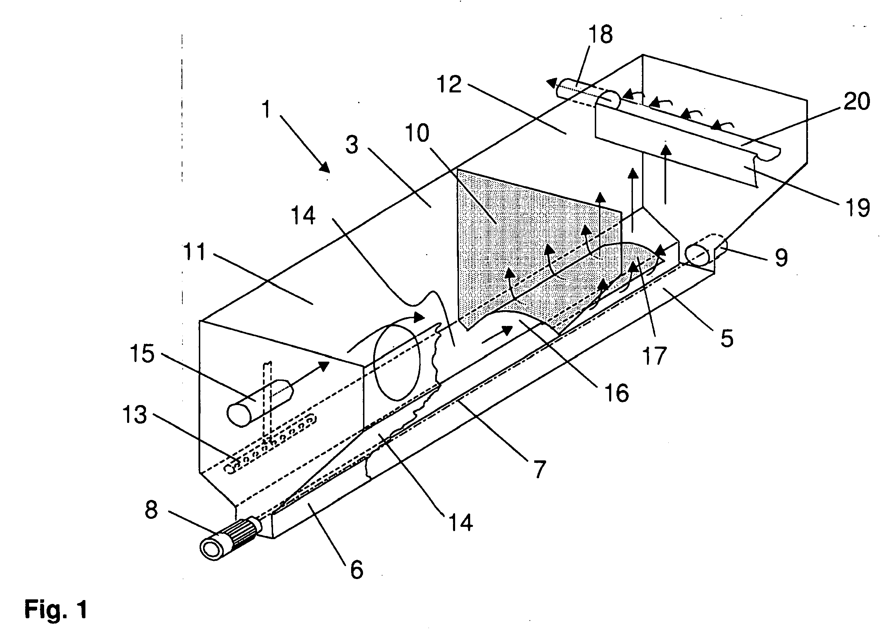

In Figur 1 ist eine erfindungsgemäße Anlage 1 zur mechanischen Reinigung von Flüssigkeiten schematisch dargestellt. Die Anlage 1 weist einen Behälter 3 zum Abscheiden von Sinkstoffen auf. Der Behälter 3 hat im dargestellten Beispiel einen im wesentlichen trapezförmigen Querschnitt, welcher günstig für die Abscheidung von Sinkstoffen ist. Im Bereich einer Sohle 5 des Behälters 3 ist ein Sammelraum 6 für die Sinkstoffe ausgebildet. In dem Sammelraum 6 ist eine Transportfördereinrichtung 7 angeordnet, welche hier als strichpunktierte Linie angedeutet ist. Die Transportfördereinrichtung 7 ist durch einen Motor 8 angetrieben und transportiert die abgeschiedenen Sinkstoffe zu einer Austragsstelle 9. Der Behälter 3 ist durch eine Trennwand 10 in zwei Kammern 11, 12 unterteilt. In einer der Kammern 11, 12 ist eine Belüftungseinrichtung 13 angeordnet, so dass diese Kammer 11 als belüfteter Sandfang betrieben werden kann.

Die zu behandelnde Flüssigkeit, insbesondere Abwasser, strömt durch einen Zulauf 15 in Pfeilrichtung in die erste Kammer 11 des Behälters 3. Über die Belüftungseinrichtung 13 wird auf einer Seite des Behälters 3 Luft eingeblasen. Hierdurch wird in der strömenden Flüssigkeit in an sich bekannter Weise eine Walzenströmung erzeugt, welche vom Zufluss unabhängig ist. Organische Abwasserinhaltsstoffe können hierdurch in der Schwebe gehalten werden und fließen mit der Flüssigkeit ab. Mineralische Partikel setzen sich dagegen an den Absetzflächen 14 ab. Durch eine Öffnung 16 im unteren Bereich der Trennwand 10 strömt das Abwasser in die zweite Kammer 12, welche als unbelüfteter Sandfang ausgebildet ist. Die unbelüftete Kammer 12 wird von unten nach oben durchströmt. Solange die Aufwärtsgeschwindigkeit der strömenden Flüssigkeit kleiner ist als die Sinkgeschwindigkeit der Teilchen, können die Sande an den Absetzflächen 14 abgesetzt werden. Die leichteren organischen Abwasserinhaltsstoffe bleiben in der Schwebe bzw. werden zusammen mit der strömenden Flüssigkeit nach oben befördert. Durch die tiefe Einleitung in die Kammer 12 werden kürzere Wege bis zur Absetzung und damit kürzere Sinkzeiten erreicht, so dass die Absetzung der Sande besonders zuverlässig erfolgt. Auch Sande kleinerer Korngrößen können gut abgesetzt werden. Um eine gleichmäßige Aufwärtsströmung in der Kammer 12 zu erreichen, ist an der Trennwand 10 eine Leiteinrichtung 17 für die Flüssigkeit angeordnet.

Vor dem Ablauf 18 kann eine Tauchwand 19 angeordnet sein, um den Austrag von Schwimmstoffen zu verhindern und die Strömung zu vergleichmäßigen. Um eine Erhöhung der Strömungsgeschwindigkeit zu vermeiden, erfolgt der Ablauf der Flüssigkeit über ein Überfallrohr 20, das im vorliegenden Beispiel quer in dem Behälter 3 angeordnet ist. Ebenso ist jedoch eine Anordnung in Längsrichtung möglich. Das Überfallrohr 20 bzw. der Ablauf 18 sind derart angeordnet, dass sich ein hydraulisches Gefälle in der Anlage 1 ergibt. Im dargestellten Beispiel ist eine belüftete Kammer 11 vor einer unbelüfteten Kammer 12 angeordnet, ebenso ist es jedoch auch möglich, die belüftete Kammer 11 als zweite Kammer anzuordnen oder mehrere belüftete oder unbelüftete Kammern hintereinander anzuordnen. Ist die belüftete Kammer 11 zuerst angeordnet, werden die Schwimmstoffe, insbesondere Fette, besonders gut zurückgehalten und die Absetzung der Sinkstoffe in der unbelüfteten Kammer 12 erfolgt besonders effektiv. Die Anordnung eines belüfteten Sandfanges und eines unbelüfteten in einem Behälter 3 ermöglicht eine besonders kurze Baulänge der Anlage 1 bei einer erhöhten Abscheideleistung. Eine derartige Anlage ist daher auch sehr gut in kleineren Kläranlagen einsetzbar; ebenso kann eine derartige Anlage besonders günstig als Kompaktanlage ausgeführt werden.

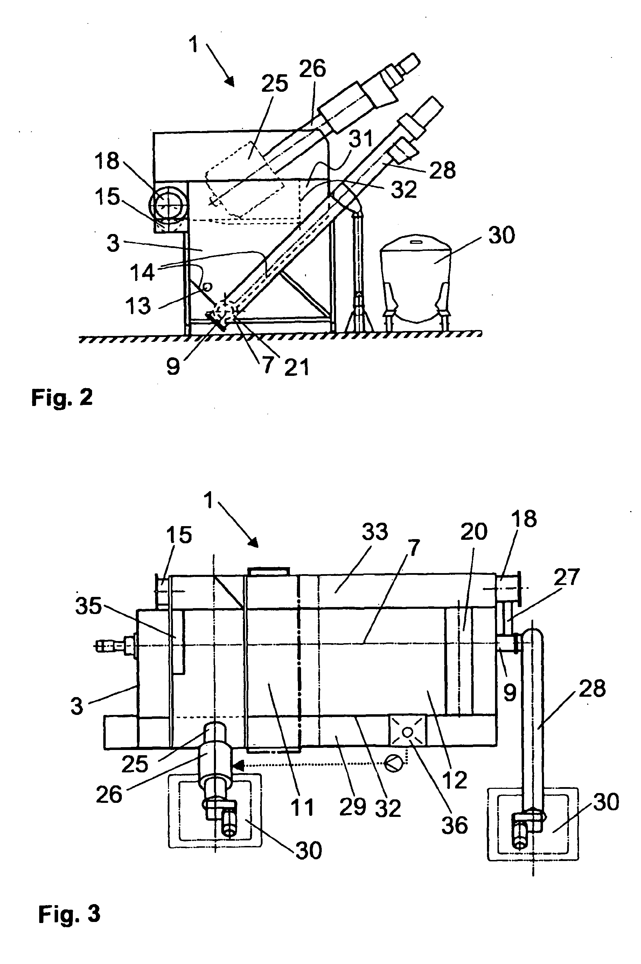

Figur 2 zeigt eine erfindungsgemäße Anlage 1 zur Reinigung von Flüssigkeiten in einer Seitenansicht. Bei der hier dargestellten Ausführungsform ist in dem Behälter 3 eine Einrichtung 25 zum Abscheiden von Schwimm- und Schwebstoffen angeordnet. Das Abwasser gelangt über den Zulauf 15 in den Behälter 3, wobei grobe Verunreinigungen in der Einrichtung 25 zum Abscheiden von Schwimm- und Schwebstoffen zurückgehalten werden. Durch die Anordnung der Einrichtung 25 in dem Behälter 3 kann eine besonders kurze Baulänge der Anlage 1 erreicht werden. Die Einrichtung 25 ist hier als Siebanlage ausgebildet. Das Rechengut entwässert hierbei im Steigrohr 26 und kann in einen bereitgestellten Container 30 ausgetragen werden. Die auf den Absetzflächen 14 abgesetzten Sinkstoffe sammeln sich in dem Sammelraum 6, wo sie von einer Räumschnecke 21 der Austragsstelle 9 zugeführt werden. Im hier dargestellten Beispiel ist an der Austragsstelle 9 eine Förderschnecke 28 zum Austrag der Sinkstoffe angeordnet. Die abgeschiedenen Sinkstoffe werden ebenfalls in Container 30 ausgetragen, ebenso können sie jedoch in eine nachgeschaltete Einrichtung zur Sandwäsche abgeworfen werden. Zur Abscheidung von Fetten ist eine Fettfangkammer 29 an dem Behälter 3 ausgebildet. Die Fettfangkammer 29 ist durch eine geschlitzte Tauchwand 32 von dem Behälter 3 abgetrennt. Durch die Flotationswirkung der in der belüfteten Kammer 11 eingeblasenen Luft werden die Schwimmstoffe aufgetrieben und anschließend in der Fettfangkammer 29 gesammelt.

Das abgeschiedene Fett kann mittels eines - hier nicht dargestellten - Zwangsräumers in eine Pumpenvorlage 36 (Fig. 3) gefördert und anschließend dem Rechengut in der Einrichtung 25 zum Abscheiden von Schwimm- und Schwebstoffen zugeführt werden. Der Austrag des Fettes erfolgt zusammen mit dem Rechengut, so dass Faulprozesse durch nicht weggefördertes Fett ausgeschlossen werden. Die Einrichtung 25 zum Abscheiden von Schwimm- und Schwebstoffen weist einen Überlauf 35 auf. Hierdurch kann die Betriebssicherheit der Anlage 1 auch bei Störungen der Einrichtung 25, beispielsweise einem zugesetzten Sieb, gewährleistet werden. An dem Überlauf 35 kann ein Rechen angeordnet sein, so dass zumindest gröbere Schwimmstoffe nicht in die Anlage gelangen können.

Die abgesetzten Sinkstoffe werden durch die - hier als strichpunktierte Linie angedeutete - Transportfördereinrichtung 7 in Fließrichtung der Flüssigkeit durch die Anlage 1 zu der Austragsstelle 9 am Ende des Behälters 3 befördert. Eine Einrichtung zur Sandwäsche kann hierdurch auf besonders einfache Weise platzgünstig angeordnet werden. Ebenso ist es jedoch möglich, die Sinkstoffe entgegen der Fließrichtung zu transportieren und zulaufseitig aus dem Behälter 3 zu entnehmen. Durch den Transport entgegen der Fließrichtung können evtl. abgesetzte organische Stoffe wieder in die Schwebe gebracht werden. Ebenso kann eine Verbindungsleitung 27 zwischen der Austragsstelle 9 und dem Ablauf 18 des Behälters angeordnet sein, welcher eine - nicht dargestellte - Belüftungseinrichtung zugeordnet ist. Durch gezielte Belüftung werden die in den abgesetzten Sinkstoffen enthaltenen organischen Stoffe aufgetrieben und mit der ablaufenden Flüssigkeit abtransportiert. Um die Anlage 1 beispielsweise zu Wartungszwecken entleeren zu können, ist an dem Behälter 3 ein Notumlauf 33 angeordnet.

In den dargestellten Beispielen ist jeweils eine belüftete Kammer 11 vor jeweils einer unbelüfteten Kammer 12 angeordnet. Ebenso ist es jedoch auch möglich, mehrere belüftete 11 oder unbelüftete Kammern 12 in beliebigen Kombinationen und in beliebiger Reihenfolge hintereinander anzuordnen. Wird eine unbelüftete Kammer 12 als erste Kammer angeordnet, ist es vorteilhaft, in dieser Kammer 12 eine Leiteinrichtung anzuordnen, welche die Flüssigkeit möglichst tief in die Kammer einleitet. Hierdurch kann eine gleichmäßige Aufwärtsströmung erreicht werden. Wird eine belüftete Kammer 11 als zweite bzw. als letzte Kammer angeordnet, erleichtert dies den Abzug der Flüssigkeit.

Durch die Anordnung einer belüfteten 11 und einer unbelüfteten Kammer 12 in einem Behälter 3 kann eine Baulänge der Anlage 1 von nur ca. 50 % herkömmlicher belüfteter oder unbelüfteter Sandfänge erreicht werden. Insbesondere bei Durchströmung der unbelüfteten Kammer 12 von unten nach oben kann eine sehr kurze Baulänge erreicht werden. Eine Kombination einer belüfteten Kammer 11 mit einer als Flachsandfang ausgeführten Kammer ist jedoch ebenso möglich.

Die Erfindung ist nicht auf die dargestellten Ausführungsbeispiele beschränkt. Abwandlungen im Rahmen der Patentansprüche fallen ebenfalls unter die Erfindung.

## Patentansprüche

1. Anlage (1) zur mechanischen Reinigung von Flüssigkeiten, insbesondere Abwasser, mit einem Behälter (3) zum Abscheiden von Sinkstoffen aus der Flüssigkeit, welcher einen Zulauf (15) und einen Ablauf (18) für die Flüssigkeit und im Bereich einer Sohle (5) einen Sammelraum (6) für die Sinkstoffe aufweist, mit einer Austragsstelle (9) für die Sinkstoffe und einer Transportfördereinrichtung (7) zum Transport der Sinkstoffe zu der Austragsstelle (9), wobei der Behälter (3) zum Abscheiden der Sinkstoffe wenigstens zwei Kammern (11, 12) aufweist, wobei wenigstens eine Kammer als belüfteten (11) und wenigstens eine Kammer als unbelüftete Kammer (12) ausgebildet ist, **dadurch gekennzeichnet, dass** die Kammern (11, 12) in Längsrichtung des Behälters hintereinander angeordnet sind.

2. Anlage nach dem vorherigen Anspruch, **dadurch gekennzeichnet, dass** in Betrieb die unbelüftete Kammer (12) des Behälters (3) im wesentlichen von unten nach oben von der Flüssigkeit durch-strömt wird.

3. Anlage nach einem der Ansprüche 1 bis 2, **dadurch gekennzeichnet, dass** die belüftete (11) und die unbelüftete Kammer (12) durch eine Trennwand (10) voneinander abgetrennt sind, welche sich in Behälterquerrichtung erstreckt und eine Öffnung (16) für die Flüssigkeit aufweist.

4. Anlage nach einem der Ansprüche 1 bis 3, **dadurch gekennzeichnet, dass** eine belüftete Kammer (11) in Flussrichtung vor einer unbelüfteten Kammer (12) angeordnet ist.

5. Anlage nach Anspruch 3, **dadurch gekennzeichnet, dass** die Öffnung (16) für die Flüssigkeit im unteren Bereich der Trennwand (10) angeordnet ist.

6. Anlage nach Anspruch 3, **dadurch gekennzeichnet, dass** an der Trennwand (10) eine Leiteinrichtung (17) für die Flüssigkeit zur Erzielung einer gleichmäßigen Aufwärtsströmung angeordnet ist.

7. Anlage nach einem der Ansprüche 1 bis 3, **dadurch gekennzeichnet, dass** eine unbelüftete Kammer (12) in Flussrichtung vor einer belüfteten Kammer (11) angeordnet ist.

8. Anlage nach dem vorherigen Anspruch, **dadurch gekennzeichnet, dass** in der unbelüfteten Kammer (12) zulaufseitig eine Leiteinrichtung für die Flüssigkeit zur Erzielung einer Aufwärtsströmung angeordnet ist.

9. Anlage nach einem der Ansprüche 1 bis 8, **dadurch gekennzeichnet, dass** der Behälter (3) zum Abscheiden von Sinkstoffen eine Fettfangkammer (29) aufweist.

10. Anlage nach einem der Ansprüche 1 bis 9, **dadurch gekennzeichnet, dass** der Behälter (3) zum Abscheiden von Sinkstoffen ablaufseitig ein Überfallrohr (20) aufweist.

11. Anlage nach einem der Ansprüche 1 bis 10, **dadurch gekennzeichnet, dass** der Behälter (3) zum Abscheiden von Sinkstoffen einen Notumlauf (33) aufweist.

12. Anlage nach einem der Ansprüche 1 bis 11, **dadurch gekennzeichnet, dass** als Transportfördereinrichtung (7) in dem Sammelraum (6) für die Sinkstoffe eine Räumschnecke (21) angeordnet ist.

13. Anlage nach einem der Ansprüche 1 bis 12, **dadurch gekennzeichnet, dass** dem Behälter (3) zum Abscheiden von Sinkstoffen eine Einrichtung zum Abscheiden von Schwimm- und Schwebstoffen (25) zugeordnet ist.

14. Anlage nach Anspruch 13, **dadurch gekennzeichnet, dass** die Einrichtung zum Abscheiden von Schwimm- und Schwebstoffen (25) in dem Behälter (3) angeordnet ist.

15. Anlage nach Anspruch 13 oder 14, **dadurch gekennzeichnet, dass** die Einrichtung zum Abscheiden von Schwimm- und Schwebstoffen (25) eine Rechen- oder Siebanlage ist.

16. Anlage nach einem der Ansprüche 13 bis 15, **dadurch gekennzeichnet, dass** die Einrichtung zum Abscheiden von Schwimm- und Schwebstoffen (25) einen Überlauf (35) aufweist.

17. Anlage nach Anspruch 16, **dadurch gekennzeichnet, dass** an dem Überlauf (35) ein Rechen zum Rückhalt von Grobstoffen angeordnet ist.

18. Anlage nach einem der Ansprüche 1 bis 17, **dadurch gekennzeichnet, dass** die Anlage (1) ein hydraulisches Gefälle aufweist.

19. Anlage nach einem der Ansprüche 1 bis 18, **dadurch gekennzeichnet, dass** die Austragsstelle (9) für die Sinkstoffe ablaufseitig angeordnet ist.

20. Anlage nach einem der Ansprüche 1 bis 18, **dadurch gekennzeichnet, dass** die Austragsstelle (9) für die Sinkstoffe zulaufseitig oder mittig angeordnet ist.

21. Anlage nach einem der Ansprüche 1 bis 20, **dadurch gekennzeichnet, dass** an der Austragsstelle (9) eine Einrichtung zum Austragen der Sinkstoffe, insbesondere eine Förderschnecke (28) oder Klassierschnecke, angeordnet ist.

22. Anlage nach einem der Ansprüche 1 bis 21, **dadurch gekennzeichnet, dass** eine Verbindungsleitung (27) zwischen der Austragsstelle (9) und dem Ablauf (18) des Behälters (3) angeordnet ist, welcher eine Belüftungseinrichtung zugeordnet ist.

23. Anlage nach Anspruch 21, **dadurch gekennzeichnet, dass** der Einrichtung zum Austragen der Sinkstoffe eine Einrichtung zur Sandwäsche zugeordnet ist.

## Claims

1. An installation (1) for the mechanical purification of liquids, especially sewage, with a container (3) for the separation of settling sediment from the liquid, which container comprises an inlet (15) and an outlet (18) for the liquid and a collection space (6) for the settling sediment in the area of a bottom part (5), with a discharge point (9) for the settling sediment and with a transport conveyor apparatus (7) for transporting the settling sediment to a discharge point (9), wherein the container (3) for the separation of the settling sediment comprises at least two chambers (11, 12) at least one chamber being designed as an aerated chamber (11) and at least one chamber being designed as a non-aerated chamber (12), **characterized in that** the chambers (11, 12) are arranged one behind the other in the longitudinal direction of the container.

2. The installation according to the previous claim, **characterized in that** in operation the non-aerated chamber (12) of the container (3) is flown through by the liquid substantially from the bottom upward.

3. The installation according to one of the claims 1 to 2, **characterized in that** the aerated chamber (11) and the non-aerated chamber (12) are separated from one another by a dividing wall (10) extending in transverse direction of the container comprising an opening (16) for the liquid.

4. The installation according to one of the claims 1 to 3, **characterized in that** an aerated chamber (11) is arranged in front of a non-aerated chamber (12) in the direction of flow.

5. The installation according to claim 3, **characterized in that** the opening (16) for the liquid is arranged in the lower area of the dividing wall (10).

6. The installation according to claim 3, **characterized in that** a guide apparatus (17) for the liquid is arranged on the dividing wall (10) for evening out the upward flow.

7. The installation according to one of the claims 1 to 3, **characterized in that** a non-aerated chamber (12) is arranged in front of an aerated chamber (11) in the direction of flow.

8. The installation according to the previous claim, **characterized in that** a guide apparatus for the liquid is arranged in the non-aerated chamber (12) on the inlet side in order to achieve an upward flow.

9. The installation according to one of the claims 1 to 8, **characterized in that** the container (3) for the separation of settling sediment comprises a fat trap chamber (29).

10. The installation according to one of the claims 1 to 9, **characterized in that** the container (3) for the separation of settling sediment comprises an overflow pipe (20) on the outlet side.

11. The installation according to one of the claims 1 to 10, **characterized in that** the container (3) for the separation of settling sediment comprises an emergency diversion channel (33).

12. The installation according to one of the claims 1 to 11, **characterized in that** a removal worm (21) is arranged in the collection space (6) for the settling sediment as a transport conveyor apparatus (7).

13. The installation according to one of the claims 1 to 12, **characterized in that** an apparatus for the separation of floating and suspended solids (25) is associated with the container (3) for the separation of settling sediment.

14. The installation according to claim 13, **characterized in that** the apparatus for the separation of floating and suspended solids (25) is arranged in the container (3).

15. The installation according to claim 13 or 14, **characterized in that** the apparatus for the separation of floating and suspended solids (25) is a rake system or sieve system.

16. The installation according to one of the claims 13 to 15, **characterized in that** the apparatus for the separation of floating and suspended solids (25) comprises an overflow (35).

17. The installation according to claim 16, **characterized in that** a rake for the retention of coarse matter is arranged on the overflow (35).

18. The installation according to one of the claims 1 to 17, **characterized in that** the installation (1) comprises a hydraulic gradient.

19. The installation according to one of the claims 1 to 18, **characterized in that** the discharge point (9) for the settling sediment is arranged on the outlet side.

20. The installation according to one of the claims 1 to 18, **characterized in that** the discharge point (9) for the settling sediment is arranged on the inlet side or in the middle.

21. The installation according to one of the claims 1 to 20, **characterized in that** an apparatus for discharging the settling sediment, especially a transport worm (28) or a or classifying worm is arranged at the discharge point (9).

22. The installation according to one of the claims 1 to 21, **characterized in that** a connecting line (27) is arranged between the discharge point (9) and the outlet (18) of the container (3), which line is associated with an aeration apparatus.

23. The installation according to claim 21, **characterized in that** a sand-washing apparatus is associated with the apparatus for discharging the settling sediment.

## Revendications

1. Installation (1) d'épuration mécanique de liquides, en particulier d'eaux usées, comportant un réservoir (3) de séparation des particules sédimentables du liquide, ledit réservoir comportant un orifice d'admission (15) et un orifice d'émission (18) du liquide ainsi qu'une chambre de collecte (6) à proximité d'une semelle (5) pour les particules sédimentables, et comportant un point d'évacuation (9) pour les particules sédimentables et un dispositif d'alimentation (7) pour le transport des particules sédimentables vers le point d'évacuation (9), dans laquelle le réservoir (3) comporte au moins deux chambres (11, 12) permettant d'éliminer les particules sédimentables et dans laquelle au moins une chambre est aérée (11) et au moins une chambre est non aérée (12), **caractérisée en ce que** les chambres (11, 12) sont agencées l'une dernière l'autre en sens longitudinal du réservoir.

2. Installation selon la revendication précédente, **caractérisée en ce qu'**en service, la chambre non aérée (12) du réservoir (3) est traversée essentiellement de bas en haut par le liquide.

3. Installation selon l'une des revendications 1 ou 2, **caractérisée en ce que** la chambre aérée (11) et la chambre non aérée (12) sont séparées par une cloison de séparation (10), cette cloison s'étendant transversalement par rapport au réservoir et comportant un orifice (16) pour le liquide.

4. Installation selon l'une des revendications 1 à 3, **caractérisée en ce qu'**une chambre aérée (11) est agencée avant une chambre non aérée (12) selon le sens d'écoulement du liquide.

5. Installation selon la revendication 3, **caractérisée en ce que** l'orifice (16) pour le liquide est agencé dans la partie inférieure de la cloison de séparation (10).

6. Installation selon la revendication 3, **caractérisée en ce qu'**un dispositif de canalisation (17) du liquide est agencé sur la cloison de séparation (10) afin d'obtenir un écoulement homogène vers le haut.

7. Installation selon l'une des revendications 1 à 3, **caractérisée en ce qu'**une chambre non aérée (12) est agencée avant une chambre aérée (11) selon le sens d'écoulement du liquide.

8. Installation selon la revendication précédente, **caractérisée en ce qu'**un dispositif de canalisation du liquide est agencé en amont dans la chambre non aérée (12) afin d'obtenir un écoulement vers le haut.

9. Installation selon l'une des revendications 1 à 8, **caractérisée en ce que** le réservoir (3) comporte un bac à graisses (29) pour éliminer les particules sédimentables.

10. Installation selon l'une des revendications 1 à 9, **caractérisée en ce que** le réservoir (3) comporte un tuyau de trop-plein (20) en aval pour éliminer les particules sédimentables.

11. Installation selon l'une des revendications 1 à 10, **caractérisée en ce que** le réservoir (3) comporte une dérivation (33) permettant d'éliminer les particules sédimentables.

12. Installation selon l'une des revendications 1 à 11, **caractérisée en ce qu'**une vis sans fin d'évacuation (21) est agencée dans la chambre de collecte (6) comme dispositif de transport (7) des particules sédimentables.

13. Installation selon l'une des revendications 1 à 12, **caractérisée en ce qu'**un dispositif de séparation (25) des particules flottantes et en suspension est associé au réservoir (3) pour éliminer les particules sédimentables.

14. Installation selon la revendication 13, **caractérisée en ce que** le dispositif de séparation (25) des particules flottantes et en suspension est agencé dans le réservoir (3).

15. Installation selon la revendication 13 ou 14, **caractérisée en ce que** le dispositif de séparation (25) des particules flottantes et en suspension est un dispositif à râteau ou à tamis.

16. Installation selon l'une des revendications 13 à 15, **caractérisée en ce que** le dispositif de séparation (25) des particules flottantes et en suspension comporte un trop-plein (35).

17. Installation selon la revendication 16, **caractérisée en ce qu'**un râteau permettant de retenir les particules grossières est disposé au trop-plein (35).

18. Installation selon l'une des revendications 1 à 17, **caractérisée en ce que** l'installation (1) comporte une chute hydraulique.

19. Installation selon l'une des revendications 1 à 18, **caractérisée en ce que** le point d'évacuation (9) des particules sédimentables est agencé en aval.

20. Installation selon l'une des revendications 1 à 18, **caractérisée en ce que** le point d'évacuation (9) des particules sédimentables est agencé en amont ou en position médiane.

21. Installation selon l'une des revendications 1 à 20, **caractérisée en ce qu'**un dispositif d'élimination des particules sédimentables est agencé au point d'évacuation (9), s'agissant en particulier d'une vis sans fin (28) d'alimentation ou de triage.

22. Installation selon l'une des revendications 1 à 21, **caractérisée en ce qu'**une conduite de connexion (27) est agencée entre le point d'évacuation (9) et l'orifice d'émission (18) du réservoir (3), à laquelle est associé un dispositif d'aération.

23. Installation selon la revendication 21, **caractérisée en ce que** le dispositif d'évacuation des particules sédimentables est associé à un dispositif de lavage de sable.
